# EUROPÄISCHE PATENTSCHRIFT

(11) **EP 3 196 380 B1**
(45) Veröffentlichungstag und Bekanntmachung des Hinweises auf die Patenterteilung: **17.04.2019**
(21) Anmeldenummer: 17151557.0
(22) Anmeldetag: 16.01.2017
(51) Int. Cl.: E04F 11/18, B22F 3/105, B22F 5/10, B33Y 80/00

(54) **VERBINDUNGSMITTEL, HANDLAUF, SOWIE VERFAHREN ZUR HERSTELLUNG EINES VERBINDUNGSMITTELS**
CONNECTING MEANS, HANDRAIL, AND METHOD FOR MANUFACTURING CONNECTING MEANS
DISPOSITIF DE FIXATION, MAIN COURANTE ET PROCÉDÉ DE FABRICATION D'UN DISPOSITIF DE FIXATION

(30) Priorität: 22.01.2016 DE 102016101127
(43) Veröffentlichungstag der Anmeldung: 26.07.2017
(73) Patentinhaber: Croso International GmbH, 59757 Arnsberg (DE)
(72) Erfinder: Terrey, Olaf, 59757 Arnsberg (DE); Cronenberg, Carl-Julius, 59757 Arnsberg (DE)
(74) Vertreter: Basfeld, Rainer

(56) Entgegenhaltungen:
- DE-A1- 4 421 873
- DE-A1-102011 112 771
- FR-A1- 2 983 503
- US-A1- 2006 286 348
- US-A1- 2013 153 844

## Beschreibung

Die vorliegende Erfindung betrifft ein Verbindungsmittel für zwei Handlaufstangen eines Handlaufes gemäß dem Oberbegriff des Anspruchs 1, sowie einen Handlauf gemäß dem Oberbegriff des Anspruchs 8, sowie ein Verfahren zur Herstellung eines Verbindungsmittels gemäß Anspruch 11.

Ein Verbindungsmittel und ein Handlauf der vorgenannten Art sind aus der US 2013/0153844 A1 bekannt. Das darin beschriebene Verbindungsmittel dient der Verbindung zweier Handlaufstangen und weist ein Gelenk zwischen zwei Einsteckmitteln auf. Zumindest eines der Einsteckmittel ist gegenüber dem Gelenk drehbar, insbesondere durch Aufschrauben des Einsteckmittels auf ein an dem Gelenk angeordnetes Gewinde.

Aus der FR 2 983 503 A1 ist ein weiteres Verbindungsmittel bekannt, über das zwei Handlaufstangen gelenkig miteinander verbunden sind. Das Verbindungsmittel umfasst Einsteckmittel, die gegenüber dem Gelenk um ihre Längsachse drehbar sind.

Auch die DE 44 21 873 A1 offenbart ein Verbindungsmittel, über das zwei Handlaufstangen gelenkig miteinander verbunden sind. Weiterhin sind auch Einsteckmittel vorgesehen, die gegenüber dem Gelenk um ihre Längsachse drehbar sind.

Aus der US 2006/0286348 A1 ist die Herstellung eines Handlaufs durch ein Laser-Sinter-Verfahren bekannt.

Handlaufstangen sind hinreichend bekannt. Im Wesentlichen handelt es sich um längliche hohle Stangen, beispielsweise aus Edelstahl.

Besagte Handlaufstangen sind vorzugsweise mit Leuchtmittelsystemen, wie beispielsweise LED Linien, ausgestattet, die in einer Nut in Längsrichtung der Handlaufstange aufgenommen sind.

Durch die Nut in Längsrichtung der Handlaufstange weist die hohle oder zumindest abschnittsweise hohle Handlaufstange, vorzugsweise einen Querschnitt auf, der nicht achsensymmetrisch bezogen auf die Längsachse ausgestaltet ist.

Zum Aufbau eines Handlaufes werden mehrere Handlaufstangen benötigt, die vor Ort mit Verbindungsmitteln verbunden werden. Oft müssen jedoch Handlaufstangen verbunden werden, die in einem Winkel größer 0° zueinander ausgerichtet sind, beispielsweise Handlaufstangen die in einem 30° Winkel zueinander ausgerichtet sind.

Hier setzt die vorliegende Erfindung an und macht es sich zur Aufgabe, ein verbessertes Verbindungsmittel für zwei Handlaufstangen vorzuschlagen, insbesondere ein Verbindungsmittel vorzuschlagen, welches besser an die vor Ort vorgefundenen Anforderungen angepasst werden kann.

Erfindungsgemäß wird diese Aufgabe durch ein Verbindungsmittel mit den kennzeichnenden Merkmalen des Anspruchs 1 gelöst.

Gemäß Anspruch 1 ist vorgesehen, dass das Verbindungsmittel mit elektrischen Verbindungsmitteln ausgestattet ist. Hierdurch können elektrische Verbindungen zwischen den Handlaufstangen auf einfache und versteckte Art und Weise vorgenommen werden.

Weitere vorteilhafte Ausgestaltungen der vorgeschlagenen Erfindung ergeben sich insbesondere aus den Merkmalen der Unteransprüche. Die Gegenstände bzw. Merkmale der verschiedenen Ansprüche können grundsätzlich beliebig miteinander kombiniert werden.

In einer vorteilhaften Ausgestaltung der Erfindung kann vorgesehen sein, dass die Anordnung ein zweites Drehlager umfasst. Hierdurch kann der Freiheitsgrad des Verbindungsmittels weiter erhöht werden.

In einer weiteren vorteilhaften Ausgestaltung der Erfindung kann vorgesehen sein, dass das erste Drehlager eine Drehachse aufweist, die der Längsachse des ersten Einsteckmittels entspricht oder parallel hierzu ausgerichtet ist.

In einer weiteren vorteilhaften Ausgestaltung der Erfindung kann vorgesehen sein, dass das zweite Drehlager eine Drehachse aufweist, die der Längsachse des zweiten Einsteckmittels entspricht oder parallel hierzu ausgerichtet ist.

In einer weiteren vorteilhaften Ausgestaltung der Erfindung kann vorgesehen sein, dass das Gelenk eine Gelenkachse aufweist, wobei die Gelenkachse senkrecht zu den Drehachsen der Drehlager ausgerichtet ist.

In einer weiteren vorteilhaften Ausgestaltung der Erfindung kann vorgesehen sein, dass das Gelenk ein erstes Gelenkelement und ein zweites Gelenkelement umfasst.

In einer weiteren vorteilhaften Ausgestaltung der Erfindung kann vorgesehen sein, dass das Verbindungsmittel mit einem Niederhalter für einen Einsatz, beispielsweise ein Leuchtmittelsystem, insbesondere eine LED-Linie, ausgestattet ist. Hierdurch kann das Verbindungsmittel eine weitere Funktion zur Fixierung beispielsweise einer Abdeckung für eine LED-Linie in der bzw. den Handlaufstangen übernehmen.

Eine weitere Aufgabe der vorliegenden Erfindung liegt darin, einen verbesserten Handlauf vorzuschlagen, insbesondere einen Handlauf vorzuschlagen, der besser an die vor Ort vorgefundenen Anforderungen angepasst werden kann.

Erfindungsgemäß wird diese Aufgabe durch einen Handlauf mit den kennzeichnenden Merkmalen des Anspruchs 8 gelöst. Dadurch, dass es sich bei dem Verbindungsmittel um ein Verbindungsmittel gemäß mindestens einem der Ansprüche 1 bis 7 handelt, können die vorteilhaften Eigenschaften des Verbindungsmittels für den Handlauf nutzbar gemacht werden. Insbesondere die Kombination aus Drehlager und Gelenk ermöglicht unterschiedlich ausgerichtete Dreh- bzw. Gelenkachsen, die wiederum eine sehr individuelle Ausrichtung der Handlaufstangen zueinander ermöglichen.

Weitere vorteilhafte Ausgestaltungen der vorgeschlagenen Erfindung ergeben sich insbesondere aus den Merkmalen der Unteransprüche. Die Gegenstände bzw. Merkmale der verschiedenen Ansprüche können grundsätzlich beliebig miteinander kombiniert werden

In einer vorteilhaften Ausgestaltung der Erfindung kann vorgesehen sein, dass die Einsteckmittel vollständig in den Aufnahmebereichen der Handlaufstangen aufgenommen sind.

In einer weiteren vorteilhaften Ausgestaltung der Erfindung kann vorgesehen sein, dass der Außenquerschnitt des Gelenks dem Außenquerschnitt der jeweils angrenzenden Handlaufstange entspricht.

Beide vorgenannten Ausgestaltungen tragen dazu bei, dass sich ein nahezu unsichtbarer Übergangsbereich zwischen Handlaufstangen und dem Verbindungsmittel ergibt, so dass der Eindruck der Einstückigkeit in diesem Bereich erweckt werden kann.

Eine weitere Aufgabe der vorliegenden Erfindung liegt darin, ein vorteilhaftes, insbesondere verbessertes, Verfahren zur Herstellung des Verbindungsmittels vorzuschlagen.

Erfindungsgemäß wird diese Aufgabe durch ein Verfahren mit den Merkmalen des Anspruchs 11 gelöst. Dadurch, dass das Verbindungsmittel mittels eines Laser-Sinter-Verfahrens, insbesondere eines metallischen 3D Druck-Verfahrens, hergestellt wird, ist eine individuelle, insbesondere an Kundenwünsche angepasste Fertigung der Verbindungsmittel möglich.

Weitere vorteilhafte Ausgestaltungen der vorgeschlagenen Erfindung ergeben sich insbesondere aus den Merkmalen der Unteransprüche. Die Gegenstände bzw. Merkmale der verschiedenen Ansprüche können grundsätzlich beliebig miteinander kombiniert werden.

In einer vorteilhaften Ausgestaltung der Erfindung kann vorgesehen sein, dass das erste Einsteckmittel und das erste Gelenkelement bzw. das zweite Einsteckmittel und das zweite Gelenkelement im gefügten Zustand mittels eines Laser-Sinter-Verfahrens, insbesondere eines metallischen 3D Druck-Verfahrens, hergestellt werden. Auf diese Art und Weise lässt sich beispielsweise ein Produktionsschritt, sprich das Fügen der vorgenannten Komponenten, einsparen.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen:

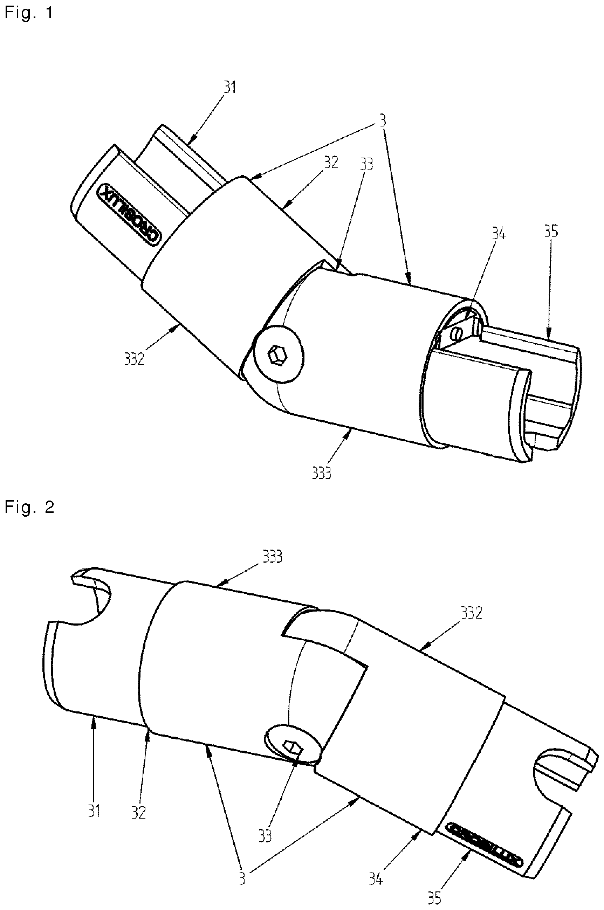

- Fig. 1: ein Verbindungsmittel in einer perspektivischen Darstellung;
- Fig. 2: ein Verbindungsmittel in einer perspektivischen Darstellung;

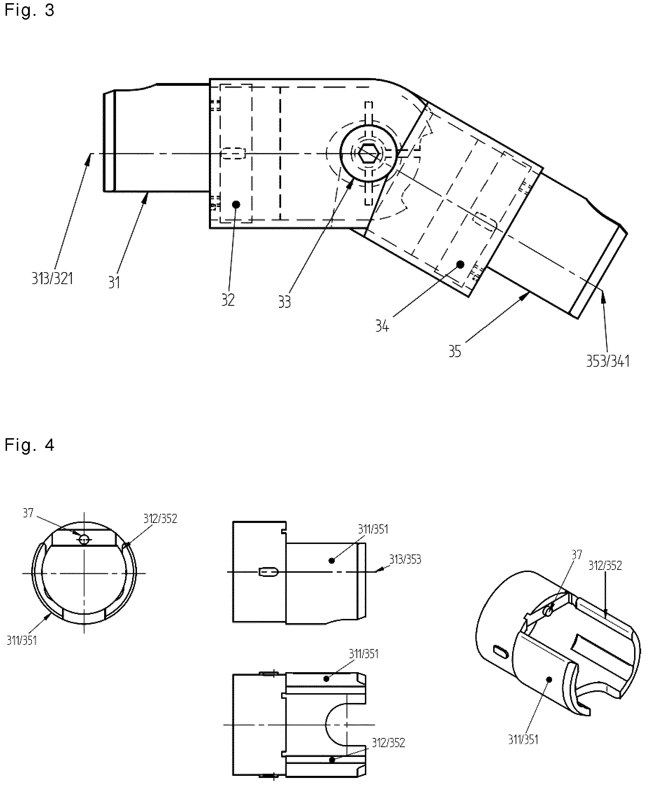

- Fig. 3: ein Verbindungsmittel in einer zu Illustrationszwecken teilweise durchsichtigen Darstellung;
- Fig. 4: ein Einsteckmittel mit Fortsatz für das Drehlager in verschiedenen Ansichten;

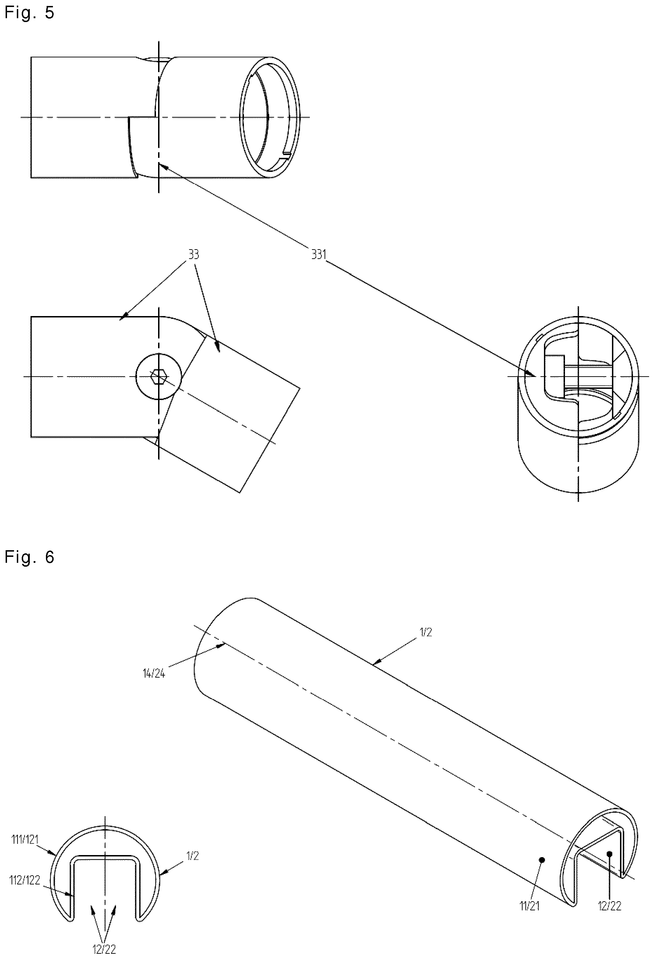

- Fig. 5: ein Gelenk in verschiedenen Ansichten;
- Fig. 6: eine Handlaufstange in einer perspektivischen Darstellung ohne Leuchtmittelsystem;

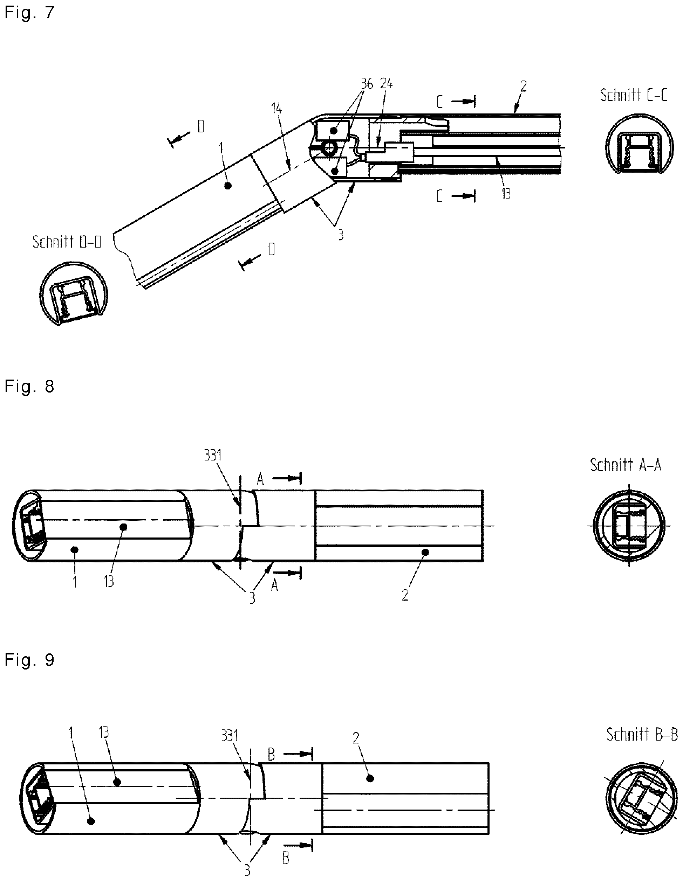

- Fig. 7: ein Handlauf in einer perspektivischen, teilweise geschnittenen Ansicht;
- Fig. 8 u.9: ein Handlauf mit unterschiedlichen Drehstellungen der Handlaufstangen bzw. Einsteckmittel.

Folgende Bezugszeichen werden in den Abbildungen verwendet:
- 1: erste Handlaufstange
- 2: zweite Handlaufstange
- 3: Verbindungsmittel

- 11: Anschlussbereich
- 12: Nut
- 13: Leuchtmittelsystem, insbesondere LED Linie
- 14: Längsachse

- 21: Anschlussbereich
- 22: Nut
- 23: Leuchtmittelsystem, insbesondere LED Linie
- 24: Längsachse

- 31: erstes Einsteckmittel
- 32: Drehlager
- 33: Gelenk
- 34: Drehlager
- 35: zweites Einsteckmittel
- 36: elektrisches Verbindungsmittel
- 37: Niederhalter

- 111: teilkreisförmiger Abschnitt
- 112: U-förmiger Abschnitt

- 121: teilkreisförmiger Abschnitt
- 122: U-förmiger Abschnitt

- 311: teilkreisförmiger Abschnitt
- 312: Aussparung
- 313: Längsachse
- 321: Drehachse

- 331: Gelenkachse
- 332: erstes Gelenkelement
- 333: zweites Gelenkelement

- 341: Drehachse

- 351: teilkreisförmiger Abschnitt
- 352: Aussparung
- 353: Längsachse

Ein erfindungsgemäßer Handlauf umfasst im Wesentlichen eine erste Handlaufstange 1, eine zweite Handlaufstange 2 und ein zwischen den Handlaufstangen angeordnetes erfindungsgemäßes Verbindungsmittel 3.

Die Handlaufstangen weisen einen endseitigen Anschlussbereich 11 zum Einstecken des Einsteckbereiches des Verbindungsmittels 3 auf. Dieser Anschlussbereich wird durch einen Hohlraum innerhalb der Handlaufstangen gebildet. Bei den Handlaufstangen 1, 2 handelt es sich vorzugsweise um Hohlprofile. Denkbar sind aber auch Vollprofile, die einen entsprechenden endseitigen Hohlraum als Anschlussbereich ausgestalten. In der hier vorliegenden beispielhaften Ausführungsform weisen die Handlaufstangen eine Nut 12 in Längsrichtung auf, die zur Aufnahme eines Einsatzes, insbesondere eines Leuchtmittelsystems 13, beispielsweise in Form einer LED Linie, ausgestaltet ist. In dieser Nut 12 ist in dem hier dargestellten Beispiel das Leuchtmittelsystem 13 aufgenommen. Alternativ kann aber auch ein nicht beleuchteter Einsatz in der Nut aufgenommen sein, beispielsweise ein Holz oder Stein. Auch kann die Nut dazu verwendet werden, die Handlaufstange auf eine Brüstung/Glasbrüstung aufzusetzen. Im Querschnitt ergibt sich, insbesondere im Anschlussbereich der Handlaufstange, ein Abschnitt in Form eines Teilkreises 111 in den ein in etwa U-förmiger Abschnitt 112 eingesetzt ist. Die erste Handlaufstange weist eine Längsachse 14 auf.

Die zweite Handlaufstange 2 weist vorzugsweise gleiche Merkmale auf, die gemäß den Bezugszeichen der Kurzübersicht gekennzeichnet sind.

Ein erfindungsgemäßes Verbindungsmittel umfasst ein erstes Einsteckmittel 31, ein zweites Einsteckmittel 35, sowie eine Anordnung aus erstem Drehlager 32, Gelenk 33 und vorzugsweise zweitem Drehlager 34, die zwischen dem ersten Einsteckmittel 31 und dem zweiten Einsteckmittel 35 angeordnet sind.

Das Einsteckmittel 31 korrespondiert im Wesentlichen mit dem Hohlraumquerschnitt im Anschlussbereich 11 der Handlaufstangen 1. In dem hier vorliegenden bevorzugten Ausführungsbeispiel weisen die Einsteckmittel 31 einen im Querschnitt teilkreisförmigen Abschnitt 311 und eine Aussparung 312 auf. Dieses Einsteckmittel 31 kann entsprechend in den Anschlussbereich 11 der ersten Handlaufstange eingeschoben werden. Das erste Einsteckmittel weist eine Längsachse 313 auf.

Das erste Einsteckmittel 31 ist mittels Drehlager 32 mit dem Gelenk 33 verbunden. Die Drehachse 321 des Drehlagers 32 entspricht vorzugsweise der Längsachse 313 des ersten Einsteckmittels 31 bzw. der Längsachse 14 der angeschlossenen Handlaufstange 1. Das Drehlager 32 kann beispielsweise eine umlaufende Nut im Gehäuse des Gelenks 33 und eine entsprechende Feder umfassen, die an einem Fortsatz des Einsteckmittels angeordnet ist.

Das zweite Einsteckmittel 35 ist im Wesentlichen identisch aufgebaut. In der Regel weist das zweite Einsteckmittel 35 die gleiche Gestalt wie das erste Einsteckmittel 31 auf. Auch hier ist in der Regel ein Drehlager 34 zwischen dem zweiten Einsteckmittel 35 und dem Gelenk 33 vorgesehen. Hinsichtlich der weiter verwendeten Bezugszeichen kann auf die Bezugszeichen der Kurzübersicht verwiesen werden.

Das Gelenk 33 als solches umfasst eine Gelenkachse 331, die senkrecht zu den beiden Drehachsen 321, 341 der Drehlager 32, 34 ausgerichtet ist. Die Gelenkachse kann beispielsweise durch eine Linsenkopfschraube gebildet werden. Vorzugsweise geht die Gelenkachse 331 durch den Schnittpunkt der beiden Drehlagerachsen 321, 341. Das Gelenk 33 umfasst insbesondere ein erstes Gelenkelement 332 und ein zweites Gelenkelement 333, die entsprechend gelenkig miteinander verbunden sind.

Das Verbindungsmittel 3 weist vorzugsweise elektrische Verbindungsmittel 36, beispielsweise in Form von Klemmen, auf, welche die elektrische Verbindung zwischen den in den Handlaufstangen angeordneten Leuchtmittelsystemen 13, 23 ermöglichen. Hierzu können Schleifkontakte in dem Gelenk 33 und/oder in den Drehlagern 32, 34 vorgesehen sein.

Ferner ist das Verbindungsmittel 3 mit Niederhaltern 37 für das Leuchtmittelsystem 13, 23 ausgestattet. Der Niederhalter kann beispielsweise an einer Abdeckung der LED-Linie aufliegen oder in besonders dafür vorgesehene Anschlussmittel eingreifen.

Weitere Details der vorgeschlagenen Erfindung ergeben sich aus einer näheren Beschreibung der Montage eines Verbindungsmittels und zwei Handlaufstangen.

Ggf. werden zunächst die elektrischen Anschlüsse verlegt, sprich die elektrischen Leitungen der LED-Linie 13 der ersten Handlaufstange 1 werden mit den elektrischen Verbindungsmitteln 36 verbunden. Anschließend wird das erste Einsteckmittel 31 in den Anschlussbereich 11 der ersten Handlaufstange 1 eingesteckt. Das erste Einsteckmittel 31 verschwindet vorzugsweise vollständig in dem Anschlussbereich 11. Auf die gleiche Art und Weise wird mit dem zweiten Einsteckmittel 35 verfahren. Auch hier können erst die elektrischen Verbindungen hergestellt werden. Anschließend wird das zweite Einsteckmittel 35 in den Anschlussbereich 21 der zweiten Handlaufstange 2 eingesteckt.

Beide Einsteckmittel 31, 35 können mit geeigneten Fixierungsmitteln befestigt werden. Es kommt beispielsweise ein leichtes Übermaß und eine hieraus resultierende Pressung in Frage. Aber auch andere Mittel, wie beispielsweise Gewindestifte, etc. sind denkbar.

Im Ergebnis ergibt sich ein Handlauf, bei dem die Handlaufstangen 1, 2 mit dem Verbindungsmittel verbunden sind, jedoch in nahezu beliebigen Ausrichtungen zueinander ausgerichtet werden können. Hierdurch lassen sich komplexe Anforderungen an die Ausrichtung einzelner Handlaufstangen am Montageort realisieren.

Vorzugsweise ist weiterhin vorgesehen, dass der Außenquerschnitt des Gelenkes 33, dort wo es auf die Handlaufstangen 1, 2 trifft, einen identischen bzw. technisch realisierbar identischen Außenquerschnitt wie die Handlaufstange 1, 2 aufweist. Es ergibt sich ein nahezu unsichtbarer Übergangsbereich zwischen Handlaufstangen 1, 2 und dem Verbindungsmittel 3, welches den Eindruck der Einstückigkeit in diesem Bereich erwecken soll.

Ein bevorzugtes Einsatzgebiet des Verbindungsmittels stellt die Verbindung zweier Handlaufstangen dar. Die Handläufe als solches können beispielsweise mittels Handlaufhalter an Wänden, Treppenaufgängen, etc. angebracht sein. Denkbar ist aber auch der Einsatz von Verbindungsmittel bzw. Handlauf als Abschluss auf einer Brüstung / Glasbrüstung. Insgesamt sind viele Einsatzzwecke denkbar.

Zur Herstellung des Verbindungsmittels kommt ein Laser-Sinter-Verfahren, insbesondere metallischer 3D Druck, in Frage. So können beispielsweise das erste Einsteckmittel 31 und das erste Gelenkelement 332 bzw. das zweite Einsteckmittel 35 und das zweite Gelenkelement 333 mittels dieses Verfahrens gefertigt oder sogar im bereits gefügten Zustand mittels dieses Verfahrens gefertigt werden. Aber auch andere Herstellungsverfahren sind denkbar.

## Patentansprüche

1. Verbindungsmittel (3) für zwei Handlaufstangen (1, 2), umfassend
- ein erstes Einsteckmittel (31) zur Verbindung mit einer ersten Handlaufstange (1), wobei das erste Einsteckmittel (31) eine Längsachse (313) aufweist,
- ein zweites Einsteckmittel (35) zur Verbindung mit einer zweiten Handlaufstange (2), wobei das zweite Einsteckmittel (35) eine Längsachse (353) aufweist,
- eine Anordnung, umfassend ein erstes Drehlager (32) und ein Gelenk (33), wobei die Anordnung zwischen den Einsteckmitteln (31, 35) angeordnet ist,
**dadurch gekennzeichnet, dass** das Verbindungsmittel (3) mit elektrischen Verbindungsmitteln (36) ausgestattet ist.

2. Verbindungsmittel nach Anspruch 1, **dadurch gekennzeichnet, dass** die Anordnung ein zweites Drehlager (34) umfasst.

3. Verbindungsmittel nach mindestens einem der Ansprüche 1 oder 2, **dadurch gekennzeichnet, dass** das erste Drehlager (32) eine Drehachse (321) aufweist, die der Längsachse (313) des ersten Einsteckmittels (31) entspricht oder parallel hierzu ausgerichtet ist.

4. Verbindungsmittel nach mindestens einem der Ansprüche 2 oder 3, **dadurch gekennzeichnet, dass** das zweite Drehlager (34) eine Drehachse (341) aufweist, die der Längsachse (353) des zweiten Einsteckmittels (35) entspricht oder parallel hierzu ausgerichtet ist.

5. Verbindungsmittel nach mindestens einem der Ansprüche 2 bis 4, **dadurch gekennzeichnet, dass** das Gelenk (33) eine Gelenkachse (331) aufweist, wobei die Gelenkachse (331) senkrecht zu den Drehachsen (321, 341) der Drehlager (32, 34) ausgerichtet ist.

6. Verbindungsmittel nach mindestens einem der Ansprüche 1 bis 5, **dadurch gekennzeichnet, dass** das Gelenk (33) ein erstes Gelenkelement (332) und ein zweites Gelenkelement (333) umfasst.

7. Verbindungsmittel nach mindestens einem der Ansprüche 1 bis 6, **dadurch gekennzeichnet, dass** es mit einem Niederhalter (37) für einen Einsatz, insbesondere ein Leuchtmittelsystem (13), insbesondere eine LED-Linie, ausgestattet ist.

8. Handlauf, umfassend
- eine erste Handlaufstange (1) mit einem endseitigen Anschlussbereich (11) für ein Einsteckmittel (31),
- eine zweite Handlaufstange (2) mit einem endseitigen Anschlussbereich (21) für ein Einsteckmittel (35),
- ein die beiden Handlaufstangen (1, 2) verbindendes Verbindungsmittel (3),
**dadurch gekennzeichnet, dass**
es sich um ein Verbindungsmittel (3) gemäß mindestens einem der Ansprüche 1 bis 7 handelt.

9. Handlauf nach Anspruch 8, **dadurch gekennzeichnet, dass** die Einsteckmittel (31, 35) vollständig in den Anschlussbereichen (11, 21) der Handlaufstangen (1, 2) aufgenommen sind.

10. Handlauf nach mindestens einem der Ansprüche 8 oder 9, **dadurch gekennzeichnet, dass** der Außenquerschnitt des Gelenks (33) dem Außenquerschnitt der jeweils angrenzenden Handlaufstange (1, 2) entspricht.

11. Verfahren zur Herstellung eines Verbindungsmittels gemäß mindestens einem der Ansprüche 1 bis 7, **dadurch gekennzeichnet, dass** das Verbindungsmittel (3) mittels eines Laser-Sinter-Verfahrens, insbesondere eines metallischen 3D Druck-Verfahrens, hergestellt wird.

12. Verfahren nach Anspruch 11, **dadurch gekennzeichnet, dass** das erste Einsteckmittel (31) und das erste Gelenkelement (332) bzw. das zweite Einsteckmittel (35) und das zweite Gelenkelement (333) im gefügten Zustand mittels eines Laser-Sinter-Verfahrens, insbesondere eines metallischen 3D Druck-Verfahrens, hergestellt werden.

## Claims

1. Connecting means (3) for two handrail bars (1, 2), comprising
- a first plug-in means (31) for the connection with a first handrail bar (1), wherein the first plug-in means (31) includes a longitudinal axis (313),
- a second plug-in means (35) for the connection with a second handrail bar (2), wherein the second plug-in means (35) includes a longitudinal axis (353),
- an arrangement comprising a first pivot bearing (32) and a joint (33), wherein the arrangement is disposed between the plug-in means (31, 35),
**characterised in that** the connecting means (3) is equipped with electric connecting means (36).

2. Connecting means according to claim 1, **characterised in that** the arrangement comprises a second pivot bearing (34).

3. Connecting means according to at least one of claims 1 or 2, **characterised in that** the first pivot bearing (32) includes a pivot axis (321) which corresponds to the longitudinal axis (313) of the first plug-in means (31) or is aligned parallel thereto.

4. Connecting means according to at least one of claims 2 or 3, **characterised in that** the second pivot bearing (34) includes a pivot axis (341) which corresponds to the longitudinal axis (353) of the second plug-in means (35) or is aligned parallel thereto.

5. Connecting means according to at least one of claims 2 to 4, **characterised in that** the joint (33) includes a joint axis (331), wherein the joint axis (331) is aligned perpendicularly to the pivot axes (321, 341) of the pivot bearings (32, 34).

6. Connecting means according to at least one of claims 1 to 5, **characterised in that** the joint (33) comprises a first joint element (332) and a second joint element (333).

7. Connecting means according to at least one of claims 1 to 6, **characterised in that** it is equipped with a retaining device (37) for an insert, in particular a lamp system (13), in particular an LED line.

8. Handrail comprising
- a first handrail bar (1) having an end-side connecting region (11) for a plug-in means (31),
- a second handrail bar (2) having an end-side connecting region (21) for a plug-in means (35),
- a connecting means (3) connecting the two handrail bars (1, 2),
**characterised in that**
it involves a connecting means (3) according to at least one of claims 1 to 7.

9. Handrail according to claim 8, **characterised in that** the plug-in means (31, 35) are completely incorporated in the connecting regions (11, 21) of the handrail bars (1, 2).

10. Handrail according to at least one of claims 8 or 9, **characterised in that** the outer cross-section of the joint (33) corresponds to the outer cross-section of the respectively adjoining handrail bar (1, 2).

11. Method for producing a connecting means according to at least one of claims 1 to 7, **characterised in that** the connecting means (3) is produced by means of a laser-sintering process, in particular a metallic 3D printing process.

12. Method according to claim 11, **characterised in that** the first plug-in means (31) and the first joint element (332) or the second plug-in means (35) and the second joint element (333) are produced in a joined state by means of a laser-sintering process, in particular a metallic 3D printing process.

## Revendications

1. Moyen de liaison (3) pour deux barres de main courante (1, 2), comprenant
- un premier moyen d'enfichage (31) pour la liaison avec une première tige de main courante (1), dans lequel le premier moyen d'enfichage (31) présente un axe longitudinal (313),
- un second moyen d'enfichage (35) pour la liaison avec une seconde tige de main courante (2), dans lequel le second moyen d'affichage (35) présente un axe longitudinal (353),
- un agencement, comprenant un premier palier rotatif (32) et une articulation (33), dans lequel l'agencement est agencé entre les moyens d'enfichage (31, 35),
**caractérisé en ce que** le moyen de liaison (3) est équipé de moyens de liaison électriques (36).

2. Moyen de liaison selon la revendication 1, **caractérisé en ce que** l'agencement comporte un second palier rotatif (34).

3. Moyen de liaison selon au moins l'une quelconque des revendications 1 ou 2, **caractérisé en ce que** le premier palier rotatif (32) présente un axe de rotation (321) qui correspond à l'axe longitudinal (313) du premier moyen d'enfichage (31) ou est orienté parallèlement à celui-ci.

4. Moyen de liaison selon au moins l'une quelconque des revendications 2 ou 3, **caractérisé en ce que** le second palier rotatif (34) présente un axe de rotation (341) qui correspond à l'axe longitudinal (353) du second moyen d'enfichage (35) ou est orienté parallèlement à celui-ci.

5. Moyen de liaison selon au moins l'une quelconque des revendications 2 à 4, **caractérisé en ce que** l'articulation (33) présente un axe d'articulation (331), dans lequel l'axe d'articulation (331) est orienté perpendiculairement aux axes de rotation (321, 341) des paliers rotatifs (32, 34).

6. Moyen de liaison selon au moins l'une quelconque des revendications 1 à 5, **caractérisé en ce que** l'articulation (33) comporte un premier élément d'articulation (332) et un second élément d'articulation (333).

7. Moyen de liaison selon au moins l'une quelconque des revendications 1 à 6, **caractérisé en ce qu'**il est équipé d'un serre-flan (37) pour un insert, en particulier un système de moyen d'éclairage (13), en particulier une ligne à LED.

8. Main courante comprenant
- une première tige de main courante (1) avec une zone de raccordement (11) côté extrémité pour un moyen d'enfichage (31),
- une seconde tige de main courante (2) avec une zone de raccordement (21) côté extrémité pour un moyen d'enfichage (35),
- un moyen de liaison (3) reliant les deux tiges de main courante (1, 2),
**caractérisée en ce que**
il s'agit d'un moyen de liaison (3) selon au moins l'une quelconque des revendications 1 à 7.

9. Main courante selon la revendication 8, **caractérisée en ce que** les moyens d'enfichage (31, 35) sont reçus entièrement dans les zones de raccordement (11, 21) des tiges de main courante (1, 2).

10. Main courante selon au moins l'une quelconque des revendications 8 ou 9, **caractérisée en ce que** la section transversale extérieure de l'articulation (33) correspond à la section transversale extérieure de la tige de main courante (1, 2) respectivement contiguë.

11. Procédé de fabrication d'un moyen de liaison selon au moins l'une quelconque des revendications 1 à 7, **caractérisé en ce que** le moyen de liaison (3) est fabriqué au moyen d'un procédé de frittage au laser, en particulier d'un procédé d'impression 3D métallique.

12. Procédé selon la revendication 11, **caractérisé en ce que** le premier moyen d'enfichage (31) et le premier élément d'articulation (332) ou le second moyen d'enfichage (35) et le second élément d'articulation (333) sont fabriqués, dans l'état assemblé, au moyen d'un procédé de frittage au laser, en particulier d'un procédé d'impression 3D métallique.
